# EUROPEAN PATENT SPECIFICATION

(11) **EP 2 298 146 B1**
(45) Date of publication and mention of the grant of the patent: **13.04.2016**
(21) Application number: 10178097.1
(22) Date of filing: 21.09.2010
(51) Int. Cl.: A47J 43/07

(54) **Food processor bowl clamp**
Schalenklammer eines Lebensmittelprozessoren
Serrage de couvercle d'un bol pour robot de cuisine

(30) Priority: 21.09.2009 US 244140 P
(43) Date of publication of application: 23.03.2011
(73) Proprietor: Conair Corporation, Stamford, CT 06902 (US)
(72) Inventor: Krasznai, Charles, Stamford, CT 06902 (US); Leung, Anthony, Stamford, CT 06902 (US)
(74) Representative: Cross, James Peter Archibald

(56) References cited:
- EP-A1- 2 071 990
- US-A1- 2004 211 850
- US-A1- 2004 252 581
- US-A1- 2005 185 509

## Description

### CROSS-REFERENCE TO RELATED APPLICATIONS

This application relates to and claims priority from United States Provisional Application 61/244140.

### BACKGROUND OF THE INVENTION

The present invention relates to food preparation appliances and, more particularly, to countertop food processor appliances.

### Description of Related Art

Countertop food processor appliances generally comprise a base, a motor housed in the base, a bowl mounted on the base for receiving food product to be mixed or chopped, a blade rotationally driven by the motor and positioned in the bowl for rotation therein, and a cover or lid for the bowl. An electrical cord extends from the base and is adapted to be plugged into an external electrical source such as a wall socket to deliver electrical energy to the motor.

Countertop food processors typically include a lid that must be locked into place on the bowl in order to activate a switch enabling operation of the motor. This is a safety precaution, though certain sizes and configurations of food processor are inherently safe without such locking a switching arrangement. Typical food processor bowls and lids have a twist-lock operation in which the lid must be rotated relative to the bowl in order to lock and engage a switch to operate the food processor motor.

A prior art food processor lid and bowl assembly is for instance described in document US2004/0252581 A1 and in document US2004/0211850 A1.

### OBJECT OF THE PRESENT INVENTION

It is an object of the present invention to provide a food processor bowl cover that can be securely, conveniently and safely locked.

### SUMMARY OF THE INVENTION

According to the present invention, a lid adapted to cover a food processor bowl is designed to safely, securely and conveniently lock to the bowl without the need for twist-locking, or rotationally moving the lid relative to the bowl. The present invention lid and bowl have mechanisms that cooperate with each other to snap-lock the lid onto the bowl without twisting.

### BRIEF DESCRIPTION OF THE DRAWING

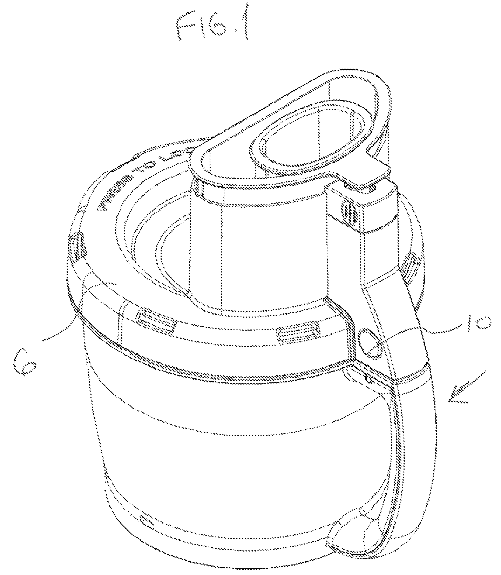

Figure 1 is a perspective view of a bowl according to a first preferred embodiment of the invention.

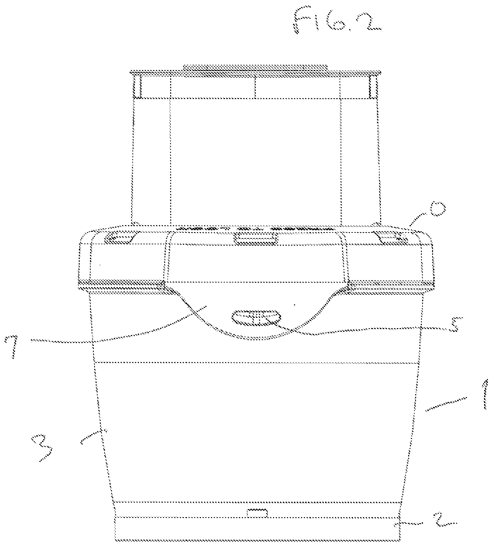

Figure 2 is a front view of a bowl according to a first preferred embodiment of the invention.

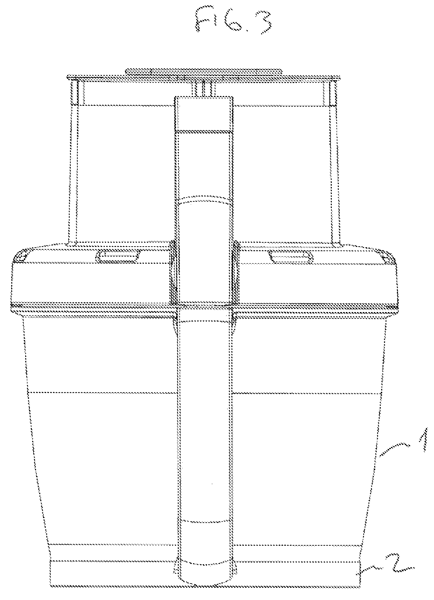

Figure 3 is a rear view of a bowl according to a first preferred embodiment of the invention.

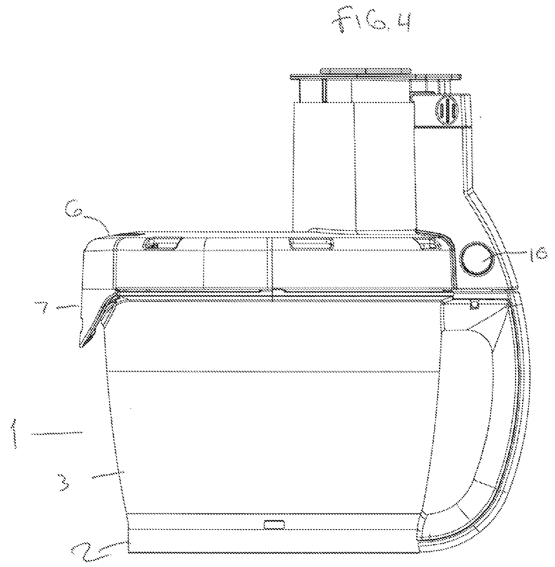

Figure 4 is a side view of a bowl according to a first preferred embodiment of the invention.

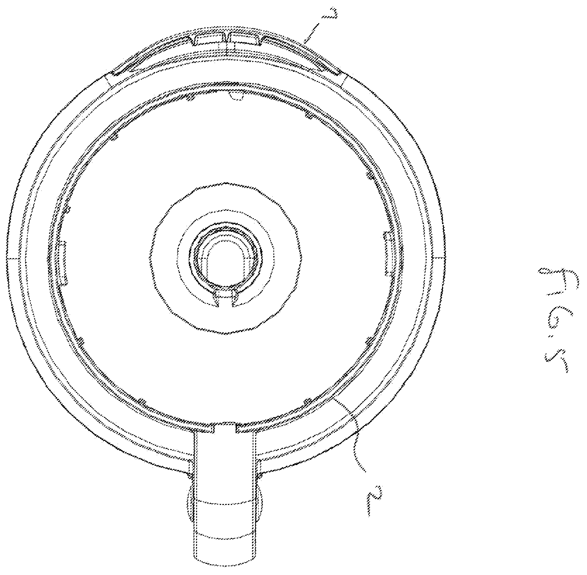

Figure 5 is a bottom view of a bowl according to a first preferred embodiment of the invention.

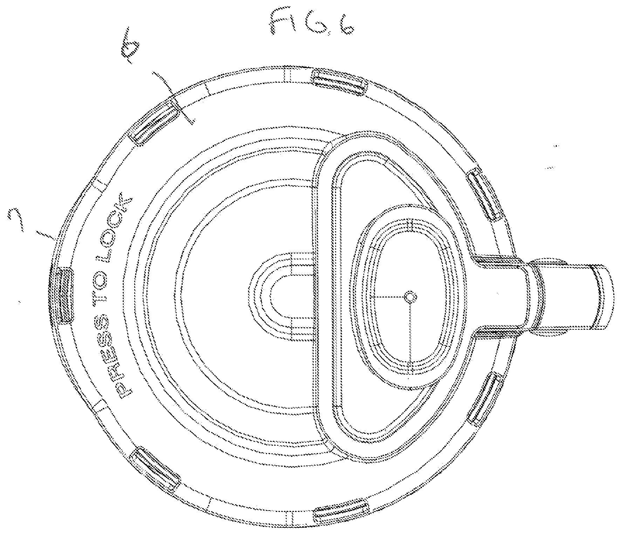

Figure 6 is a top view of a bowl according to a first preferred embodiment of the invention.

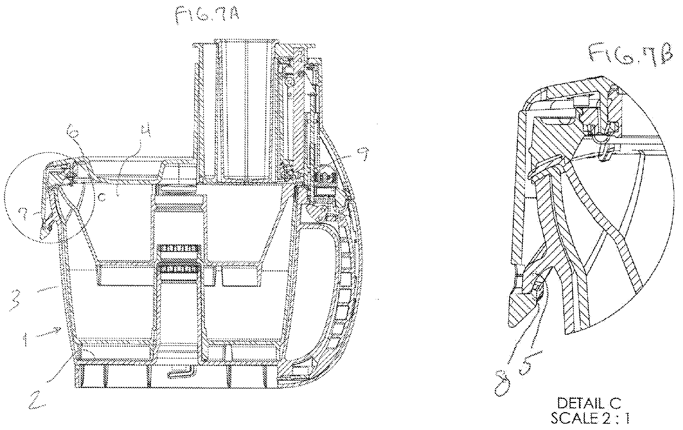

Figure 7A is a side, cross-sectional view of a bowl according to a first preferred embodiment of the invention.
Figure 7B is a partial, side, cross-sectional view of a bowl according to a first preferred embodiment of the invention.

### DESCRIPTION OF THE PREFERRED EMBODIMENT OF THE PRESENT INVENTION

Referring to the Drawing Figures, according to the present invention a food processor bowl 1 comprises a floor 2, a sidewall 3 and a top opening 4. The exterior of the bowl 1 has a lid-retention lip 5. The lip 5 extends generally radially from the sidewall 3 and it extends downwardly at its distal end to form, in side profile, a hook-like mechanism. The food processor lid 6 has a downwardly extending tongue 7 with an internal hook 8. The tongue 7, which is integrally formed with the lid 6, flexes so that as the lid 6 is installed onto the bowl, the hook 8 contacts and slides over the lid-retention lip 5. This flexes the tongue 7 radially outwardly until the hook 8 is slid past the lip 5, at which time the tongue moves the hook 8 underneath the lip 5. At the same time, a spring-loaded latch assembly 9, of a conventional type, releasably attaches to the bowl 1 in a manner generally known. A latch release button 10 is used to release the latch assembly 9.

Thus, during use, the user may attach the lid 6 by pressing it onto the bowl 1. The user may press either side first, so that the tongue 7 and lip 5 lock first and then the latch assembly 9 locks, or vice-versa, or simultaneously. To release and remove the lid, the release button 10 is activated first.

While the preferred embodiment of the present invention has been disclosed herein, it is understood that various modification can be made without departing from the scope of the presently claimed invention.

## Claims

1. A food processor lid and bowl assembly, said assembly comprising
a food processor bowl (1) comprising a floor (2), a sidewall (3), and a top opening (4);
a lid-retention lip (5) located on an exterior surface of said sidewall extending generally radially from said sidewall (3) and extending downwardly at its distal end to form, in side profile, a hook-shape;
a food processor lid (6) having a generally flat surface adapted to cover a top opening of said bowl (1);
a downwardly extending tongue (7) attached to said lid; and
an internal, flexible hook (8) on said tongue (7) adapted to contact said lip and flex during installation of said lid over said bowl and further adapted to physically lock relative to said lip when said cover is fully installed on said bowl; **characterised in that** the assembly further comprises
a spring-loaded latch assembly (9) mounted to said lid and adapted to releasably attach to said bowl.

## Patentansprüche

1. Deckel- und Schüsselanordnung für eine Küchenmaschine, wobei die Anordnung Folgendes umfasst:
eine Küchenmaschinenschüssel (1), die einen Boden (2), eine Seitenwand (3) und eine obere Öffnung (4) aufweist;
eine Deckelrückhaltelippe (5), die auf einer Außenfläche der Seitenwand angeordnet ist, sich allgemein radial von der Seitenwand (3) erstreckt und sich an ihrem distalen Ende nach unten erstreckt, um, von der Seite aus betrachtet, eine Hakenform auszubilden;
einen Küchenmaschinendeckel (6) mit einer allgemein flachen Oberfläche, der angepasst ist, um eine obere Öffnung der Schüssel (1) zu bedecken;
eine sich nach unten erstreckende Zunge (7), die am Deckel angebracht ist;
und
einen innenliegenden flexiblen Haken (8) an der Zunge (7), der angepasst ist, mit der Lippe in Kontakt zu kommen und sich zu biegen, wenn der Deckel auf die Schüssel aufgesetzt wird, und der ferner angepasst ist, im Verhältnis zur Lippe physisch einzurasten, wenn der Deckel vollständig auf die Schüssel aufgesetzt ist; **dadurch gekennzeichnet, dass** die Anordnung ferner Folgendes umfasst:
eine federbelastete Schnappverschlussanordnung (9), die am Deckel angebracht und angepasst ist, an der Schüssel abnehmbar befestigt zu werden.

## Revendications

1. Ensemble de couvercle et bol pour robot de cuisine, ledit ensemble comprenant :
un bol de robot de cuisine (1) comprenant un fond (2), une paroi latérale (3) et une ouverture supérieure (4) ;
une lèvre (5) retenant le couvercle située sur une surface externe de ladite paroi latérale s'étendant de manière générale radialement de ladite paroi latérale (3) et s'étendant vers le bas à son extrémité distale pour adopter, en profil latéral, une forme de crochet ;
un couvercle de robot de cuisine (6) ayant une surface généralement plate qui est à même de couvrir une ouverture supérieure dudit bol (1) ;
une languette (7) s'étendant vers le bas fixée audit couvercle ;
et
un crochet interne flexible (8) sur ladite languette (7), qui est à même de venir en contact avec ladite lèvre et à fléchir au cours de l'installation dudit couvercle sur ledit bol et qui est à même en outre de se bloquer physiquement par rapport à ladite lèvre lorsque ledit couvercle est complètement installé sur ledit bol ; **caractérisé en ce que** l'ensemble comprend en outre
un ensemble de verrouillage (9) sollicité par un ressort monté sur ledit couvercle et qui est à même de se fixer audit bol de manière amovible.
